(19) Europäisches Patentamt

European Patent Office

Office européen des brevets

(11) Veröffentlichungsnummer: **0 268 838 B1**

(12) **EUROPÄISCHE PATENTSCHRIFT**

(45) Veröffentlichungstag der Patentschrift: **21.04.93**

(21) Anmeldenummer: **87115520.6**

(22) Anmeldetag: **22.10.87**

(51) Int. Cl.⁵: **D03D 15/04**, B29C 67/14, D04B 1/20

(54) **Flächengebilde aus Fasern, insbesondere als Verstärkungseinlage für Kunststoffteile.**

(30) Priorität: **24.10.86 DE 3636300**
**03.04.87 DE 3711213**

(43) Veröffentlichungstag der Anmeldung:
**01.06.88 Patentblatt 88/22**

(45) Bekanntmachung des Hinweises auf die
Patenterteilung:
**21.04.93 Patentblatt 93/16**

(84) Benannte Vertragsstaaten:
**AT DE FR GB NL SE**

(56) Entgegenhaltungen:
**DE-A- 2 735 495**
**DE-A- 2 934 782**
**GB-A- 2 160 553**
**US-A- 4 631 098**

(73) Patentinhaber: **VERSEIDAG-**
**INDUSTRIETEXTILIEN GMBH**
**Industriestrasse 56 Postfach 4080**
**W-4150 Krefeld 1(DE)**

(72) Erfinder: **Plöntges, Margret**
**Bergiusstrasse 22**
**W-4152 Kempen 1(DE)**
Erfinder: **Cox, Herbert**
**Lange Bahn 3**
**W-4170 Geldern 3(DE)**

(74) Vertreter: **Klingseisen, Franz, Dipl.-Ing. et al**
**Dr. F. Zumstein Dipl.-Ing. F. Klingseisen**
**Bräuhausstrasse 4**
**W-8000 München 2 (DE)**

**Beschreibung**

Die Erfindung betrifft ein Flächengebilde nach dem Oberbegriff des Anspruchs 1.

Aus DE-A-27 35 495 ist ein kunststoffbeschichtetes Gewebe bekannt, das für die Herstellung von Spanndächern, Sonnensegeln und dergleichen Bedachungsflächen vorgesehen ist. Um nach längerem Gebrauch eine bleibende Verformung und Faltenbildung bzw. Verwerfung des Gewebes zu vermeiden, wird für die Kettfäden ein Polyestermaterial mit im Vergleich zu den Schußfäden um ein Mehrfaches höherem Schrumpfvermögen verwendet, wobei das so erzeugte Gewebe vor seiner Kunststoffbeschichtung einer spannungslosen Heißluftschrumpfung unterworfen wird. Auf diese Weise erhält man ein kunststoffbeschichtetes Gewebe, das bei gleicher Belastung in Kett- und Schußrichtung weitgehend übereinstimmende Dehnungswerte besitzt.

Es ist bekannt, Gewebe aus Polyesterfäden oder Matten aus Glasfasern als Verstärkungseinlagen in Formteilen aus Kunststoff, wie beispielsweise Bootskörpern, Surfbrettern und dgl., zu verwenden, wobei die Verstärkungseinlage in eine Form eingelegt, gegebenenfalls mittels eines Klebers befestigt, und danach in Kunststoff eingebettet wird. Die bekannten Verstärkungseinlagen haben, sofern sie kostengünstig sind, ein relativ hohes Gewicht, oder sie sind bei geringerem Gewicht sehr teuer. In jedem Falle können die bekannten Verstärkungseinlagen nur bedingt an starke Formänderungen angepaßt werden, wodurch ihr Einsatz beschränkt ist.

Der Erfindung liegt die Aufgabe zugrunde, ein Flächengebilde der eingangs angegebenen Art so auszubilden, daß es bei geringem Gewicht und relativ niedrigen Herstellungskosten gut verformbar und damit vielfältig als Verstärkungseinlage einsetzbar ist.

Diese Aufgabe wird durch die Merkmale im Kennzeichen des Anspruchs 1 gelöst. Wird die Verstärkungseinlage eingespannt und danach durch Wärmeeinwirkung von einer Wärmequelle oder durch das Aufbringen eines warmen Kunststoffmaterials erwärmt, so daß es schrumpft, so wird durch die Fixierung der Verstärkungseinlage bzw. deren Einspannung eine Spannung auf die Verstärkungseinlage aufgebracht, die in dem verstärkten Kunststoffteil aufrecht erhalten bleibt, so daß sich eine vorgespannte Verstärkungseinlage ergibt.

Dadurch, daß die Fäden als Gelege mit Bindungskette angeordnet sind, wird eine gute Verformbarkeit des Flächengebildes erzielt, wobei in der Hauptbeanspruchungsrichtung hochfeste und im wesentlichen nicht dehnbare Fäden verwendet werden können, die die erforderliche Festigkeit in der Verstärkungseinlage gewährleisten.

Vorteilhafte Ausgestaltungen der Erfindung sind in den weiteren Ansprüchen angegeben.

Eine beispielsweise Ausführungsform der Erfindung wird nachfolgend anhand der Zeichnung näher erläutert.

Es zeigen:

Fig. 1    eine Draufsicht auf ein Gelege von sich kreuzenden Fäden.

Fig 2    eine Draufsicht auf eine Bindungskette in Form eines Gewirkes, und

Fig. 3    in gleicher Darstellung die Verbindung der Bindungskette nach Fig. 2 mit dem Gelege nach Fig. 1.

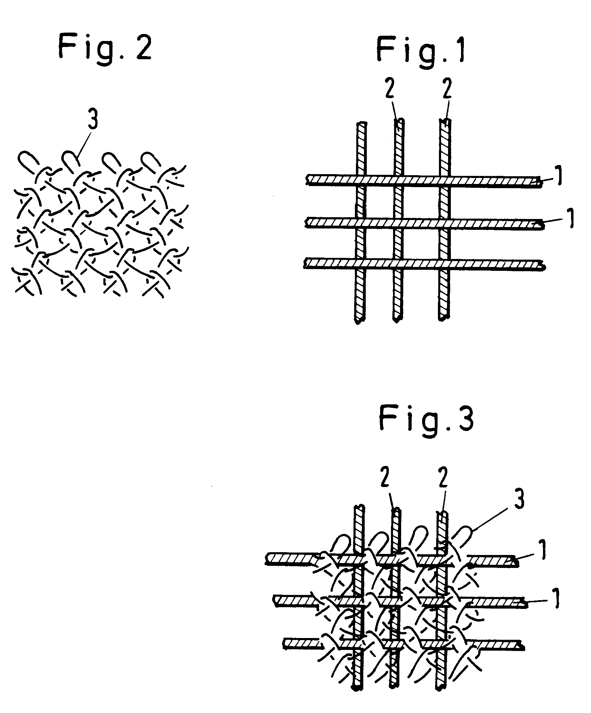

Mit 1 sind Fäden bzw. Garne bezeichnet, die beispielweise in Schußrichtung verlaufen, während quer dazu liegende Fäden bzw. Garne 2 in Kettrichtung verlaufen, wie dies bei einem Gewebe bekannt ist, bei dem Kett- und Schußfäden ineinander verflochten sind. Bei dem dargestellten Ausführungsbeispiel dagegen bilden die Fäden 1 eine obere Lage und die Fäden 2 eine darunterliegende Lage, ohne daß die quer zueinander liegenden Fäden miteinander verflochten sind, so daß sich ein Gelege von zwei aufeinanderliegenden Schichten von Fäden bzw. Garnen 1 und 2 ergibt. In jeder Schicht liegen die Fäden im wesentlichen parallel zueinander, wobei sie einen vorgegebenen Abstand voneinander haben. Vorteilhafterweise bestehen die Fäden 1 und 2 jeweils aus einem Multifilament. Die nur lose aufeinanderliegenden, sich kreuzenden Fäden 1, 2 werden durch eine Bindungskette 3 zusammengehalten, die in Form eines Gewirkes ausgebildet sein kann. Fig. 2 und 3 zeigen eine geschlossene Trikotlegung. Diese Bindungskette ist so ausgebildet, daß bei der Handhabung des Geleges die Fäden 1, 2 leicht relativ zueinander verschoben werden können. Dies wird dadurch erreicht, daß die Bindungskette die Kreuzungsstellen der sich kreuzenden Fäden 1,2 lose umgreift, wobei die Fäden des Geleges dennoch zusammengehalten werden.

Die in Fig. 2 wiedergegebene Bindungskette wird in das Gelege nach Fig. 1 in der Weise eingearbeitet, daß die Fäden 1 und 2 an den Kreuzungsstellen durch die Bindungskette 3 miteinander verbunden werden, wie dies Fig. 3 zeigt. Dabei werden die quer zueinander liegenden Fäden 1 und 2 so miteinander verbunden, daß Relativbewegung der beiden Fäden zueinander möglich ist.

Die Bindungskette 3 kann in der Weise gewirkt oder auch gewebt sein, daß sie jeweils nur die Kreuzungsfäden 1 und 2 miteinander verbindet, während die in Fig. 1 wiedergegebenen Zwischenräume zwischen den einzelnen Fäden 1 und 2 im wesentlichen frei bleiben. Vorzugsweise wird die Bindungskette 3 so ausgebildet, daß auch in den Zwischenräumen zwischen den einzelnen Fäden 1 und 2 eine Verknüpfung der Bindungskette bzw. eine Masche vorhanden ist. Dadurch wird bei einer Verformung des auf diese Weise hergestellten Flächengebildes eine gleichmäßige Verschiebung der weniger dehnfähigen Fäden 2 pro Flächeneinheit relativ zu den dehnfähigeren Fäden 1 durch die über die Fläche gleichmäßigere Dehnung des Gewirkes der Bindungskette 3 erzielt.

Für die Festigkeit der Verstärkungseinlage ist das Material der Bindungskette 3 nicht wesentlich, sie kann beispielsweise aus einem Polyestergarn bestehen, das wesentlich dünner ist als das Multifilament der die Belastung aufnehmenden Fäden 1, 2, wie dies auch in Fig. 3 schematisch wiedergegeben ist.

Es werden für die Fäden 1 und 2 jeweils hochfeste Fäden bzw. Garne verwendet, wobei die Fäden 1 bei einer räumlichen Verformung des Gewebes durch ihren E-Modul und/oder durch ihre Temperaturfestigkeit leichter verformbar bzw. dehnbar sind als die quer dazu liegenden Fäden 2. Hierdurch ergibt sich ein in einer Richtung sehr festes Flächengebilde, das in der im wesentlichen senkrecht dazu liegenden Richtung beweglich und leicht verformbar ist. Wird für die leichter verformbaren Fäden 1 hochfestes bzw. hochverstrecktes Polyolefin verwendet, das einen Schmelzpunkt von etwa 120°C aufweist und damit gegenüber Erwärmung wesentlich weniger beständig ist als das für die Fäden 2 verwendete Polyestermaterial mit einem Schmelzpunkt in der Größenordnung von 220°C, so erhält man nach der Verformung unter Wärmeeinwirkung, bei der die Temperatur so ausgelegt ist, daß die Poyolefinfäden 1 leicht verformt werden können, während die quer dazu liegenden Polyesterfäden 2 sich im wesentlichen nicht dehnen, und nach Abkühlung eine Verstärkungseinlage, bei der auch die bei der Verformung leicht verformbaren Fäden 1 wieder eine hohe Festigkeit aufweisen. Für die Fäden 1 wird hochfestes Polyolefin verwendet, das aber unter Wärmeeinwirkung bei einer bestimmten Temperatur besser dehnbar ist als Polyester.

Durch die beschriebene Ausgestaltung ergibt sich zunächst eine leicht verformbare Verstärkungseinlage, die in Verbindung mit dem Kunststoffmaterial, in dem sie eingebettet wird, eine hohe Festigkeit ergibt. Zudem kann bei gleicher Festigkeit gegenüber einer Verstärkungseinlage aus Glasfasermatten eine Verringerung des Gewichts der Verstärkungseinlage um etwa 2/3 erzielt werden.

Die auf diese Weise ausgebildete Verstärkungseinlage weist eine hohe Saugfähigkeit für das darauf aufgebrachte Kunststoffmaterial auf, in dem die Verstärkungseinlage eingebettet wird. Zudem kann für bestimmte Anwendungsfälle das Aufbringen eines Klebers entfallen, weil die durch Wärmeeinwirkung sich erweichenden Fäden 1 eine gute Verbindung mit dem aufgebrachten Kunststoffmaterial ergeben.

Die sich kreuzenden Fäden 1,2 des Geleges bestehen aus einem im kalten Zustand hochfesten Material mit hoher Bruchdehnung wobei aber das Material der in der einen Richtung verlaufenden Fäden einen niedrigeren Schmelzpunkt und Erweichungspunkt hat als das Material der in der Querrichtung verlaufenden Fäden. So bestehen beispielsweise die Fäden 2 aus Polyolefin mit einem Schmelzpunkt von 163 bis 175°C und einem Erweichungspunkt von 150 bis 155°C, während die Fäden 1 aus Polyester mit einem Schmelzpunkt von 256°C und einem Erweichungspunkt von 230 bis 250°C bestehen. Durch den niedrigeren Schmelz- bzw. Erweichungspunkt beginnen die Fäden 2 bei Wärmeeinwirkung unter der Erweichungstemperatur zu schrumpfen, während, die Fäden 1 noch nicht schrumpfen bzw. ihre Längsabmessung beibehalten. Im kalten Zustand bzw. bei Umgebungstemperatur haben die geschrumpften Fäden wieder die hohe Festigkeit wie im Ausgangszustand.

Durch die unterschiedlichen Schrumpfeigenschaften ist es möglich, bei der Verarbeitung der Verstärkungseinlage durch Wärmeeinwirkung, beispielsweise durch Aufbringen eines warmen, flüssigen Kunststoffmaterials, eine Schrumpfung in einer Richtung der Verstärkungseinlage zu erzielen, wodurch sich die Verstärkungseinlage besser an eine vorgegebene Form anlegt, wenn die schrumpfenden Fäden vor der Warmeeinwirkung fixiert oder die Verstärkungseinlage am Rand festgelegt wird. Die Fixierung der Verstärkungseinlage kann in der Weise erfolgen, daß die Verstärkungseinlage in eine konkave Form eingelegt oder um einen konvexen Formkörper gelegt wird, worauf die Verstärkungseinlage mit einem flüssigen Kunststoffmaterial eingestrichen wird, das danach verfestigt oder aushärtet und auf diese Weise die Fäden der Verstärkungseinlage fixiert. Wird die Verstärkungeinlage um eine konvexe Formfläche gelegt, so kann sie auch an den Rändern festgelegt werden. Beim Einlegen in eine konkave Form und Festlegen der Ränder der Verstärkungseinlage muß ein Formstempel verwendet werden, der bei Wärmeeinwirkung die vorgegebene Form der Verstärkungseinlage aufrechterhält. Wird bei einer derartigen Anordnung von einer äußeren Wärmequelle, beispielsweise durch Erwärmen der Form, oder durch ein aufgebrachtes, warmes Kunststoffmaterial die Temperatur so weit erhöht, daß eine Schrumpfung der Fäden der Verstärkungseinlage ausgelöst wird, so wird durch die Fixierung der Verstärkungseinlage eine Spannung auf deren Fäden aufgebracht, die nach Beendigung der Wärmeeinwirkung beibehalten wird, so daß die Verstärkungseinlage im fertigen Formgegenstand in gespanntem Zustand vorliegt.

Die Fäden können in Abhängigkeit vom jeweiligen Verwendungszweck in einem dichten oder weiten Abstand voneinander angeordnet sein. Die Fäden 1,2 können auch rautenförmig angeordnet sein, so daß sie sich in stumpfen und spitzen Winkeln anstelle von rechten Winkeln schneiden. Sie können auch einen unterschiedlichen Titer haben. Anstelle von Polyester- und Polyolefinfäden können auch andere Kunststoffmaterialien eingesetzt werden, bei denen das Material des einen Fadens unter Wärmeeinwirkung schrumpft oder stärker schrumpft, während das Material des quer dazu verlaufenden Fadens nicht oder nicht so stark schrumpft. Vorzugsweise werden hochfeste Kunststoffäden mit hoher Bruchdehnung verwendet. Es können auch hochfeste Kunststoffäden mit geringer Bruchdehnung verwendet werden.

Die Verstärkungseinlage kann beispielsweise in Verbindung mit Schaumstoffbahnen verarbeitet werden. So kann auf eine vorhandene Schaumstoffmatte die Verstärkungseinlage aufgebracht und mittels eines Zweikomponenten-Polyurethan-Schaumstoffklebers getränkt werden, der flächig verhärtet, worauf das so gebildete Produkt unter Temperatureinwirkung geformt wird, wobei die Schaumstoffkleberschicht ausreagiert. Ebenso ist es möglich, auf eine Schaumstoffmatte die Verstärkungseinlage aufzulegen und mit Polyurethan-Schaumstoff zu tränken, der dann aufgeschäumt wird, wobei noch ein Textilgewebe zur Abdeckung aufgelegt und mit dem Aufbau verbunden werden kann. Die Verstärkungseinlage in Verbindung mit Schaumstoffbahnen eignen sich insbesondere für Innenverkleidungteile von Kraftfahrzeugen.

Bei der Anwendung der Verstärkungseinlage können auch mehrere Verstärkungseinlagen übereinanderliegend verwendet werden, wobei je nach der erwünschten Steifigkeit des Endproduktes die stärker schrumpfenden Fäden jeder Verstärkungseinlage in der gleichen Richtung verlaufen können oder auch quer zueinander angeordnet werden können. Ebenso ist es möglich, die Verstärkungseinlage so auszulegen, daß in Kett- und Schußrichtung gleiches Fadenmaterial verwendet wird, so daß bei Wärmeeinwirkung in den beiden, senkrecht zueinander liegenden Richtungen eine Schrumpfung bzw. Spannungsaufbringung eintritt.

Eine Verstärkungseinlage nach der Erfindung kann auf den verschiedensten Gebieten Anwendung finden. So ist sie nicht nur als Verstärkungseinlage für Kunststoffteile, beispielsweise für Surfbretter, Bootskörper, Badewannen und dgl. geeignet, sondern auch für die Herstellung von Segeln, wobei das zunächst bewegliche Flächengebilde durch Kunststoffkaschierung verfestigt wird. Zudem ergibt sich die Möglichkeit, auf diese Weise durch Wärmeeinwirkung tiefziehbare Segel, beispielsweise für Surfbretter, herzustellen. Die Kunststoffkaschierung des Flächengebildes kann dabei auch in Form von aufgebrachten Kunststoffolien erfolgen.

Für rohrförmige oder stangenförmige Bauteile wird das erfindungsgemäße Flächengebilde vorzugsweise schlauchförmig ausgebildet, wobei bei einer Beanspruchung des Bauteils über die Längsabmessung sich die hochfesten, nicht dehnbaren Fäden 2 sich in Längsrichtung des Schlauches erstrecken, während die unter Verformungsbedingungen dehnbaren Fäden 1 in Querrichtung verlaufen. Für einen beispielsweise durch Innendruck beaufschlagten Schlauch ist aber auch die umgekehrte Ausgestaltung möglich.

Die Bindungskette 3 kann in Form einer Strickbindung ausgelegt sein oder auch in einer anderen Bindungslegung die eine relativ große Beweglichkeit der Fäden 1 und 2 zuläßt. Fig.2 und 3 zeigen eine geschlossene Trikotlegung der Bindungskette.

Bei einer beispielsweisen Ausführungsform des Flächengebildes sind in der einen Richtung 7,1 Fäden/cm, in der quer dazu verlaufenden Richtung 3,0 Fäden/cm und in der Bindekette 6,0 Maschen/cm vorhanden, wobei es ein Flächengewicht von 90 - 150 g/m$^2$ hat. In diesem Falle wird bei den in der folgenden Tabelle angegebenen Fadenwerten für den Wert 3,0 Fäden/cm der Faden 2 und für den Wert 7,1 Fäden/cm der Faden 1 eingesetzt.

Anstelle von Polyester- oder Polyolefinfäden können auch andere Fadenmaterialien eingesetzt werden, bei denen das Material des einen Fadens unter Verformungsbedingungen leichter dehnbar als das der quer dazu verlaufenden Fäden ist.

Die Garnstärke kann von dtex 50 bis dtex 3300 je nach Einsatz schwanken.

4

# EP 0 268 838 B1

Im folgenden sind bevorzugte Werte der verwendeten Fäden aufgeführt:

| | Faden 1 | Faden 2 | Bindekette 3 |
|---|---|---|---|
| Garnart | Polyester Tr. | Polyolefin PP | Polyester Tr. 680 |
| Garntype | hochfest, 712 | hochfest lp hard | normalfest |
| Garnstärke dtex | 830 | 380 | 50 |
| Kapillaranzahl | 200 | 60 | 20 |
| Fadenfestigkeit g/d | 5,5 - 6,5 | 8,5 - 9,5 | 3,5 - 4,3 |
| Bruchdehnung % | 16 - 19 | 24 - 25 | 7 - 8 |
| Erweichungspunkt | 230 - 250°C | 150 - 155°C | 230 - 250°C |
| Schmelzpunkt | 256°C | 163 - 175°C | 256°C |
| spez. Gewicht g/cm³ | 1,38 | 0,91 | 1,38 |

Die Fäden 1 können für die Kett- und die Fäden 2 für die Schußrichtung und umgekehrt eingesetzt werden.

**Patentansprüche**

1. Flächengebilde aus Fasern als Verstärkungseinlage für geformte Kunststoffteile, mit sich in zwei Richtungen kreuzenden Kunststofffäden, wobei die Fäden in der einen Richtung aus einem Material bestehen, das bei Einwirkung einer unter dem Schmelzpunkt des Materials liegenden Temperatur schrumpft, während die quer dazu liegenden Fäden aus einem Material bestehen, das bei dieser Temperatureinwirkung nicht oder nicht so stark schrumpft,

**dadurch gekennzeichnet,**

daß das in der einen Richtung Liegende bei Wärmeeinwirkung schrumpfende Material nach dem Schrumpfen wieder seine ursprüngliche Festigkeit annimmt und einen geringeren Schmelzpunkt hat als das Material der quer dazu Liegenden Fäden, und

daß die Fäden (1, 2) in Form eines Geleges übereinanderliegend angeordnet und durch eine Bindungskette (3) derart miteinander verbunden sind, daß eine Relativbewegung der Fäden (1, 2) relativ zueinander möglich ist.

2. Flächengebilde nach Anspruch 1,
   dadurch gekennzeichnet,
   daß die Fäden (1,2) im kalten Zustand hochfest sind und nach Wärmeeinwirkung und Abkühlung diese Eigenschaft wieder annehmen.

3. Flächengebilde nach den Ansprüchen 1 und 2,
   dadurch gekennzeichnet,
   daß die in der einen Richtung liegenden Fäden (1) stärker dehnbar sind als die quer dazu liegenden Fäden (2).

4. Flächengebilde nach Anspruch 3,
   dadurch gekennzeichnet,
   daß die in der einen Richtung liegenden Fäden einen geringeren E-Modul aufweisen als die quer dazu liegenden Fäden.

## Claims

1. Flat fibre fabric as a reinforcing element for shaped synthetic parts, having synthetic fibres crossing in two directions, the fibres in one direction consisting of a material which shrinks when subjected to a temperature below the melting point of the material, whilst the threads lying transversely thereto consist of a material which does not shrink or does not shrink so much when subjected to this temperature, characterised in that the material lying in one direction which shrinks under the effect of heat resumes its original strength after shrinkage and has a lower melting point than the material of the fibres lying transversely thereto, and in that the fibres (1, 2) are arranged one above the other in a layered arrangement and are interconnected by means of a binding chain (3) so as to enable relative movement of the fibres (1, 2) relative to one another.

2. Flat fabric according to claim 1, characterised in that the fibres (1,2) have high strength when cold and re-attain this quality after the action of heat and cooling.

3. Flat fabric according to claims 1 and 2, characterised in that the fibres (1) running in one direction are more extensible than the fibres (2) running transversely thereto.

4. Flat fabric according to claim 3, characterised in that the fibres running in one direction have a lower modulus of elasticity than the fibres running transversely thereto.

## Revendications

1. Tissu plat en fibres en tant qu'élément de renforcement pour des parties formées en matière synthétique avec des fils en matière synthétique se croisant dans deux directions, dans lequel les fils situés dans une direction sont réalisés en un matériau qui se rétracte lors de l'influence d'une température au-dessous du point de fusion du matériau, tandis que les fils situés transversalement à cette direction sont réalisés en un matériau qui, sous l'effet de cette température, ne se rétracte pas ou ne se rétracte pas aussi fortement
   caractérisé en ce que
   les fils du matériau se rétractant sous l'effet de la chaleur et dirigés dans une direction, après le retrait recouvrent leur solidité d'origine et possèdent un point de fusion plus faible que les fils du matériau situés transversalement par rapport à ceux-ci, et en ce que les fils (1, 2) sont agencés en juxtaposition

6

sous forme d'une rangée ou nappe et sont reliés entre eux par une chaîne de liage (3), et en ce que le mouvement relatif des fils (1, 2) est possible les uns par rapport aux autres.

2. Tissu plat en fibres selon la revendication 1,
caractérisé en ce que
les fils (1, 2) sont très résistants à l'état froid et récupèrent cette propriété après l'effet de la chaleur et le refroidissement.

3. Tissu plat en fibres selon les revendications 1 et 2,
caractérisé en ce que
les fils (1) situés dans une direction sont plus fortement extensibles que les fils (2) situés transversalement par rapport à ceux-ci.

4. Tissu plat en fibres selon la revendication 3,
caractérisé en ce que
les fils situés dans une direction présentent un module d'élasticité plus faible que les fils situés transversalement par rapport à ceux-ci.

Fig. 2

Fig.1

Fig.3